# EUROPEAN PATENT APPLICATION

(11) **EP 3 239 943 A1**
(43) Date of publication of application: **01.11.2017**
(21) Application number: 17167194.4
(22) Date of filing: 20.04.2017
(51) Int. Cl.: G07G 1/00, G06Q 20/20, G06Q 20/40, G08B 13/196

(54) **MONITORING DEVICE AND METHOD**

(30) Priority: 28.04.2016 JP 2016090272
(71) Applicant: Toshiba TEC Kabushiki Kaisha, Tokyo 141-0032 (JP)
(72) Inventor: SAITOU, Takahiro, Shinagawa-ku, Tokyo 141-8562 (JP); MIYAGI, Daisuke, Shinagawa-ku, Tokyo 141-8562 (JP)
(74) Representative: Takeuchi, Maya

(57) **Abstract**

According to one embodiment, an image capturing unit that captures images of a first region positioned at an entrance, a second region in which a customer himself/herself performs accounting of a commodity, and a third region positioned at an exit in a checkout region relating to registration and accounting of the commodity, an extraction unit that extracts feature information indicating features of the customer, from a captured image obtained in each of the regions, a tracking unit that tracks a movement path until the same customer reaches the third region from the first region, based on similarity of the feature information extracted from the captured image of the first region to the feature information extracted from the captured images of the second region and the third region, and a reporting unit that performs reporting when the movement path indicates that the customer reaches the third region from the first region without passing through the second region are provided.

## Description

### FIELD

The present invention relates to the technologies regarding a Point-Of-Sale (POS) terminal in general, and embodiments described herein relate in particular to a monitoring device and a monitoring method.

### BACKGROUND

In the related art, in a store such as a supermarket, a sales clerk operates a Point-Of Sale (POS) terminal, so as to perform registration and accounting of commodities. In the store, a checkout method which is referred to as, for example, a semi-self checkout type, and a checkout method which is referred to as, for example, a self-checkout type are used. In the semi-self checkout type, a sales clerk registers commodities and a customer himself/herself performs accounting of the commodities. In the self-checkout type, a customer himself/herself performs registration and accounting of the commodities.

In such a semi-self checkout type or a self-checkout type, a customer performs accounting of commodities. Thus, cheating which can be referred to as, for example, "shoplifting" in which a customer goes out of a store without accounting may occur. In the related art, in the semi-self checkout type, a technology as follows is known. A first image capturing device and a second image capturing device are provided. The first image capturing device captures an image of a customer who asks for registration of a commodity, and the second image capturing device captures an image of, for example, the vicinity of an exit. Captured images of a customer, which are obtained by the capturing devices are compared to each other, and thus it is determined whether or not a customer who does not perform accounting is in the vicinity of the exit.

However, in the above-described technology in the related art, a captured image is not used for determination of whether or not accounting is completed, but the determination is performed based on a completion notification which is transmitted from an accounting device. Thus, in a monitoring system operated based on comparison of captured images, the above-described technology in the related art is not effective, and may be improved more.

To this end, there is provided a monitoring device comprising:
image capturing means for capturing an image of each of a first region positioned at an entrance, a second region in which a customer performs accounting of a commodity, and a third region positioned at an exit in a checkout region relating to registration and accounting of the commodity;
extraction means for extracting feature information indicating features of the customer, from a captured image obtained in each of the first, second, and third regions;
tracking means for tracking a movement path until the customer reaches the third region from the first region, based on similarity of the feature information extracted from the captured image of the first region to the feature information extracted from the captured image of each of the second region and the third region; and
reporting means for reporting when the movement path indicates that the customer reaches the third region from the first region without passing through the second region.

Preferably, a registration device configured for a sales clerk to register a commodity to be purchased by a customer is provided in the first region,
an accounting device configured for the customer to account for the commodity registered in the registration device is provided in the second region, and
the image capturing means for capturing an image of the second region is provided at a position allowing an image of the customer to be captured, at each of the registration device and the accounting device.

Preferably still, processing which relates to accounting is performed in the accounting device, and then the image capturing means provided in the accounting device transmits a captured image obtained during the processing to the monitoring device.

Preferably yet, a registration and accounting device configured for a customer to perform registration and accounting of a commodity is disposed in the second region, and
the image capturing means for capturing an image of the second region is provided at a position allowing an image of the customer to be captured, at each registration and accounting device.

Suitably, processing which relates to registration and accounting is performed in the registration and accounting device, and then the image capturing means provided in the registration and accounting device transmits a captured image obtained during the processing to the monitoring device.

Suitably still, the image capturing means comprises a first camera in the first region, a second camera in the second region, and a third camera in the third region.

Suitably yet, the image capturing means comprises a plurality of first cameras in the first region, a plurality of second cameras in the second region, and a third camera in the third region.

The invention also relates to a monitoring method comprising:
extracting feature information indicating features of a customer, from a captured image obtained by capturing an image of each of a first region positioned at an entrance, a second region in which a customer performs accounting of a commodity, and a third region positioned at an exit;
tracking a movement path until the customer reaches the third region from the first region, based on similarity of the feature information extracted from the captured image of the first region to the feature information extracted from the captured image of each of the second region and the third region; and
reporting when the movement path indicates that the customer reaches the third region from the first region without passing through the second region.

Preferably, the method further comprises:
registering a commodity to be purchased by a customer in the first region,
accounting for the commodity registered in the registration device is provided in the second region, and
capturing an image of the second region at a position allowing an image of the customer to be captured, at each of a registration device and a accounting device.

Preferably still, the method further comprises:
performing accounting in the accounting device, and then transmitting a captured image obtained during the processing to a monitoring device.

Preferably yet, the method further comprises:
performing registration and accounting of a commodity in the second region, and
capturing an image of the second region at a position allowing an image of the customer to be captured, at each of a registration and an accounting device.

Suitably, the method further comprises:
processing registration and accounting in the registration and accounting device, and then transmitting a captured image obtained during the processing to the monitoring device.

Suitably yet, the image capturing is performed by a first camera in the first region, a second camera in the second region, and a third camera in the third region.

The invention further relates to a monitoring system comprising the monitoring device as defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic diagram illustrating an example of a store layout according to a first embodiment.
FIG. 2 is a schematic diagram illustrating an example of a configuration of a monitoring system according to the first embodiment.
FIG. 3 is a diagram illustrating an example of a configuration of a registration device according to the first embodiment.
FIG. 4 is a flowchart illustrating an example of transmission-image selection processing performed by the registration device in the first embodiment.
FIG. 5 is a diagram illustrating an example of a configuration of an accounting device according to the first embodiment.
FIG. 6 is a diagram illustrating an example of a configuration of a monitoring server according to the first embodiment.
FIG. 7 is a diagram illustrating an example of a data structure of a tracking table.
FIG. 8 is a flowchart illustrating an example of monitoring processing performed by the monitoring server in the first embodiment.
FIG. 9 is a schematic diagram illustrating an example of a store layout according to a second embodiment.
FIG. 10 is a schematic diagram illustrating an example of a configuration of a monitoring system according to the second embodiment.
FIG. 11 is a diagram illustrating an example of a configuration of a monitoring server according to the second embodiment.

### DETAILED DESCRIPTION

An object of the exemplary embodiment is to provide a monitoring device and a monitoring method in which cheating of taking a not-paid commodity out of a store can be efficiently monitored in the store having a type of causing a customer himself/herself to perform accounting.

In general, according to one embodiment, a monitoring device includes image capturing means, extraction means, tracking means, and reporting means. The image capturing means captures an image of each of a first region positioned at an entrance, a second region in which a customer himself/herself performs accounting of a commodity, and a third region positioned at an exit, in a checkout region which relates to registration and accounting of commodities. The extraction means extracts feature information which indicates features of a customer, from the captured image of each of the regions. The tracking means tracks a movement path until the same customer reaches the third region from the first region, based on similarity of the feature information extracted from the captured image of the first region to the feature information extracted from the captured image of each of the second region and the third region. The reporting means performs a report when the movement path indicates that the customer reaches the third region from the first region without passing through the second region.

A monitoring device and a monitoring method according to an embodiment will be described below in detail with reference to the drawings. In the following embodiments, an example in which the embodiments are applied to a store such as a supermarket will be described. However, the embodiments are not limited to the embodiment.

### First Embodiment

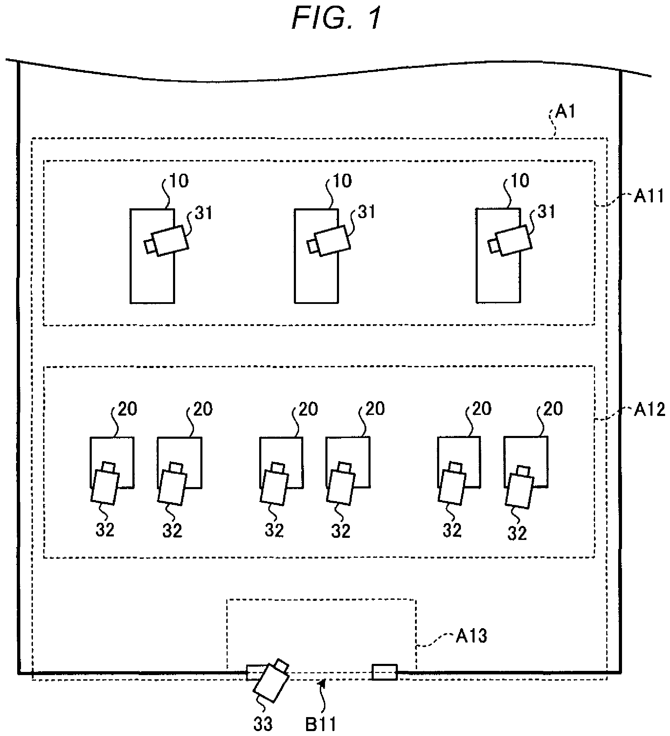

FIG. 1 is a schematic diagram illustrating an example of a store layout according to a first embodiment. As illustrated in FIG. 1, a store has a checkout region A1 which relates to registration and accounting of commodities. The checkout region A1 includes a registration region A11, an accounting region A12, and an exit region A13.

The registration region A11 corresponds to a first region positioned at an entrance of the checkout region A1. In the registration region A11, a registration device 10 is provided. The accounting region A12 corresponds to a second region in which a customer performs accounting of a commodity. In the accounting region A12, an accounting device 20 is provided. The exit region A13 corresponds to a third region positioned at an exit of the checkout region A1. In the exit region A13, an exit B11 of a store is provided. Although not illustrated, it is assumed that a region in which commodities as a sales target are displayed is provided in the store (for example, space over the checkout region A1).

The registration device 10 is a commodity data processing device which is operated by a sales clerk and is configured to performs registration processing of a commodity to be purchased by a customer. The accounting device 20 is a commodity data processing device which is operated by a customer, and is configured to perform accounting processing of a commodity registered in the registration device 10. That is, the registration device 10 and the accounting device 20 realize a checkout method which is referred to as, for example, a semi-self type.

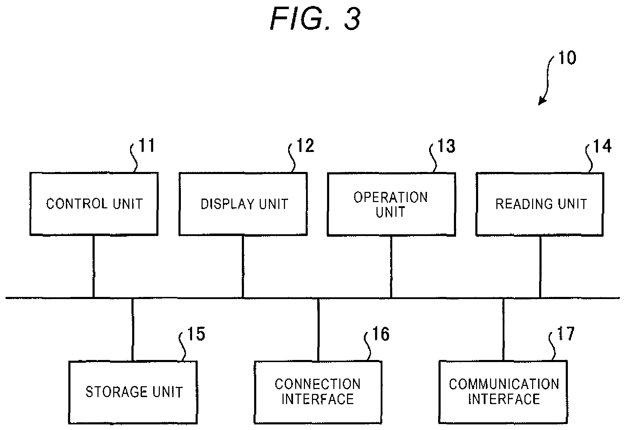

In a store having a layout illustrated in FIG. 1, an operation when a customer purchases a commodity is as follows. Firstly, the customer puts a commodity to be purchased into a shopping basket or the like, and moves into the registration region A11 registration device 10). In the registration device 10, a sales clerk causes a reading unit 14 (which will be described later) (see FIG. 3) to read a bar code attached to the commodity, and thus registers the commodity. If registration of all commodities relating to one transaction is completed, the sales clerk selects (designates) one accounting device 20 as an accounting destination. The sales clerk notifies the customer of the designated accounting device 20, and thus guides the customer to the accounting destination. The registration device 10 transmits accounting information to the designated accounting device 20. The accounting information includes information such as unit price of each of the registered commodities or the number of pieces of each of the registered commodities.

If registration of the commodities is completed, the customer takes the commodities (shopping basket), and moves to the accounting region A12, Then, the customer performs accounting in the accounting device 20 designated by the sales clerk. At this time, the accounting device 20 performs accounting processing based on the accounting information which is transmitted from the registration device 10 in advance. If the accounting is completed, the customer puts the purchased commodities into a plastic bag and the like, and then moves to the exit region A13 (exit B11).

In this manner, in the semi-self checkout type, it is possible to perform division into registration and accounting. Thus, it is possible to achieve improvement of efficiency in processing, for example, reduction of a time to wait at a register. However, in the semi-self checkout type, a customer himself/herself performs accounting of commodities. Thus, cheating which is referred to as, for example, "shoplifting" in which a customer takes a not-paid commodity out of a store may occur.

In a monitoring system of the embodiment, images of the registration region A11, the accounting region A12, and the exit region A13 are respectively captured, and detection of a customer who may do cheating is performed based on the captured images. A configuration of the monitoring system according to the embodiment will be described below.

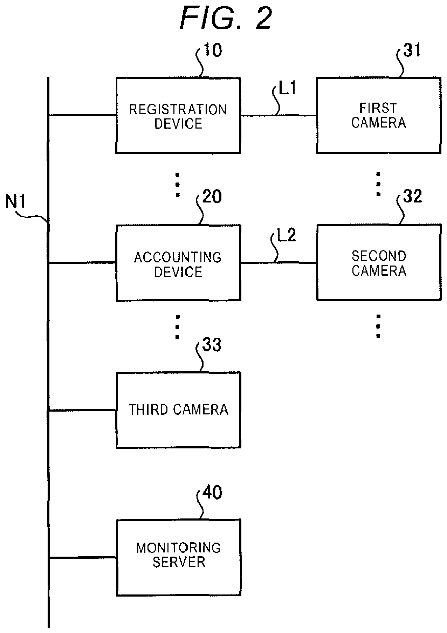

FIG. 2 is a schematic diagram illustrating an example of a configuration of the monitoring system according to the first embodiment. As illustrated in FIG. 2, the monitoring system includes a first camera 31, a second camera 32, a third camera 33, and a monitoring server 40 along with the registration device 10 and the accounting device 20 which are described above. The registration device 10, the accounting device 20, the third camera 33, and the monitoring server 40 are connected to a network N1 such as a local area network (LAN).

The first camera 31 is an image capturing device configured to capture an image of a customer in the registration region A11 (registration device 10). The first camera 31 is provided in each registration device 10 (see FIG. 1). More preferably, the first camera 31 is provided at a position allowing an image of a face of the customer to be captured, in each registration device 10. The registration device 10 and the first camera 31 are connected to each other by a connection line L1. The position at which the first camera 31 is disposed is not particularly limited. The first camera 31 may be provided to be integrated with the registration device 10 or may be provided in, for example, the ceiling of the store in a form of a monitoring camera, and the like.

The registration device 10 cooperates with the first camera 31, so as to transmit a captured image (referred to as a first captured image below) obtained during registration processing, to the monitoring server 40. The captured image includes a still image and a moving image.

FIG. 3 is a diagram illustrating an example of a configuration of the registration device 10 according to the first embodiment. As illustrated in FIG. 3, the registration device 10 includes a control unit 11. The control unit 11 has computer components such as a central processing unit (CPU), a system-on-a-chip (SoC), a read only memory (ROM), a random access memory (RAM), and the like.

A display unit 12, an operation unit 13, a reading unit 14, a storage unit 15, a connection interface 16, a communication interface 17, and the like are connected to the control unit 11 through a bus, for example.

The display unit 12 has a display device such as a liquid crystal display. The display unit 12 displays various types of information such as a commodity name or a commodity code of a registered commodity, under control of the control unit 11. The operation unit 13 includes various types of operation keys or pointing devices. The operation unit 13 receives an operation of an operator (sales clerk). For example, the operation unit 13 includes an operation key for an instruction to start or complete registration processing, and numeric keys for inputting, for example, a commodity code or the number of pieces of a commodity. The operation unit 13 may be a touch panel provided on a display surface of the display unit 12.

The reading unit 14 is a code reader configured to enable reading of a code symbol such as a bar code or a two-dimensional code. For example, the reading unit 14 reads a commodity code which is held in a code symbol attached to a commodity, from the code symbol. Here, the commodity code corresponds to identification information for identifying a commodity. Individual identification information is assigned to a commodity on a per commodity type basis.

The storage unit 15 is a storage device such as a hard disk drive (HDD) or a flash memory. The storage unit 15 stores a program executed by the control unit 11 and various types of data used when the program is executed. For example, the storage unit 15 stores a commodity master (not illustrated) in advance. In the commodity master, a commodity code of each commodity is correlated with commodity information including a commodity name, unit price, and the like of a commodity. The storage unit 15 may store a captured image obtained by capturing an image of the face of each sales clerk, and feature information in advance, in order to distinguish the face of a sales clerk from the face of a customer. The feature information is extracted from the captured image and indicates features of the face.

The connection interface 16 is an interface which is connectable to the first camera 31. The connection interface 16 receives a first captured image input from the first camera 31. The communication interface 17 is a communication interface which is connectable to the network N1. The communication interface 17 transmits and receives various types of information to and from an external device (for example, accounting device 20 and monitoring server 40) which is connected to the network N1.

In the registration device 10 having the above configuration, if a sales clerk operates and thus a code symbol attached to a commodity which is a purchase target is read, the control unit 11 stores a commodity code read by the reading unit 14, in the RAM and the like. Thus, the commodity is registered. If the number of pieces of a commodity is input, the control unit 11 registers the input number of pieces thereof in correlation with the commodity code. The control unit 11 acquires a first captured image obtained by the first camera 31, during a period in which registration processing of a commodity is performed.

If registration of commodities corresponding to one transaction is completed, the control unit 11 generates accounting information based on commodity codes and the number of pieces which are registered until registration is completed. Here, the accounting information includes, for example, a commodity name or price of each commodity (commodity code), and the total payment. It is assumed that the commodity name or price of each commodity is acquired based on commodity information which is registered in a commodity master.

If a specific accounting device 20 is caused to be selected (designated) by the operation unit 13 and the like, by a sales clerk, the control unit 11 transmits commodity information to the selected (designated) accounting device 20. The control unit 11 transmits the first captured image acquired during the registration processing, to the monitoring server 40. It is assumed that the number of first captured images (still images) or the number of frames (moving images) which are transmitted to the monitoring server 40 are not particularly limited. The accounting device 20 may be automatically selected by the control unit 11, based on availability and the like of the accounting device 20.

The first captured image is set as a reference image used when the same customer is identified (recognized) in monitoring processing which will be described later. Thus, it is preferable that the control unit 11 transmits the first captured image obtained by capturing an image of a distinctive portion of the face and the like of a customer, to the monitoring server 40. For example, the control unit 11 may select a first captured image which is to be transmitted to the monitoring server 40, among first captured images obtained during the registration processing, based on a face area, a frequency of the face of the same person showing, and the like. Processing relating to selection of a first captured image will be described below.

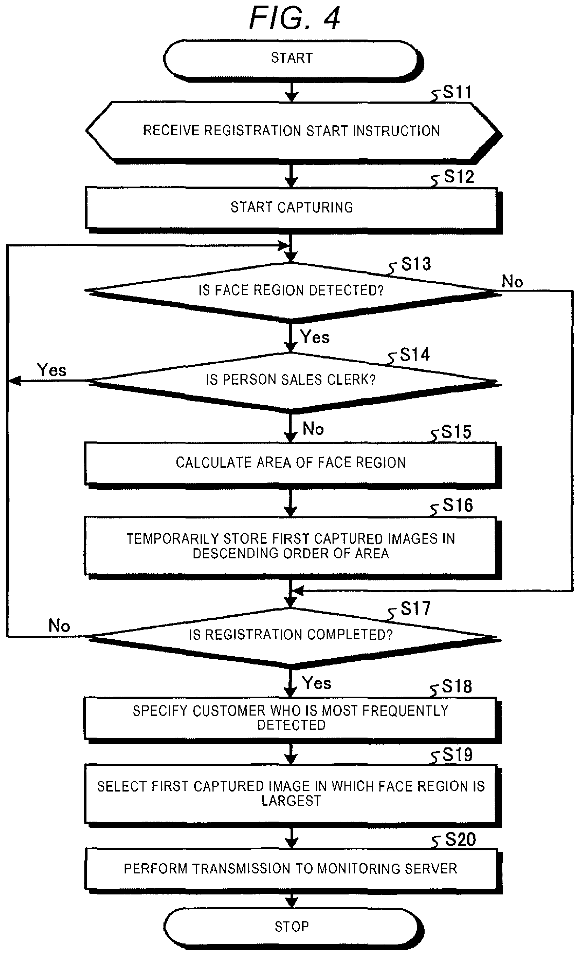

FIG. 4 is a flowchart illustrating an example of transmission-image selection processing performed by the registration device 10 in the first embodiment. This processing is performed in the background of the registration processing. It is assumed that a well-known technology is used as a technology regarding detection of a face area, facial recognition, and the like, in this processing.

Firstly, if an instruction to start registration is received through the operation unit 13 and the like (Act 11), the control unit 11 causes the first camera 31 to start image capturing (Act 12).

The control unit 11determines whether or not a face region is detected based on a first captured image input from the first camera 31 (Act 13). When detection of the face region is not possible (Act 13; No), the control unit 11 causes the process to proceed to Act 17. If the face region is detected from the first captured image (Act 13; Yes), the control unit 11 compares features of the detected face region to features of a face region of each sales clerk, which is stored in the storage unit 15, so as to determine whether or not a person of whom an image is captured is a sales clerk (Act 14).

When the person of whom an image is captured is a sales clerk (Act 14; Yes), the control unit 11 causes the process to return to Act 13. When the person of whom an image is captured is not a sales clerk, that is, in a case of a customer (Act 14; No), the control unit 11 calculates the area of the face region (Act 15), and temporarily stores first captured images in the RAM and the like, in a descending order (or an ascending order) of the area (Act 16).

The control unit 11 determines whether or not an instruction to complete registration is received through the operation unit 13 and the like (Act 17). When the instruction to complete registration is not received (Act 17; No), the control unit 11 causes the process to return to Act 13. Thus, first captured images which are obtained by capturing of the first camera 31 and include the face regions of customers are temporarily stored in an order of an area of the face region, during a period in which a commodity is registered.

If the instruction to complete registration is received (Act 17; Yes), the control unit 11 compares features of the face region in the first captured images which are temporarily stored, and thus separately recognizes the same person (customer). Then, the control unit 11 specifies the face of a customer which appears most frequently among recognized persons (Act 18). For example, a customer (for example, customer who waits for his/her turn) other than a customer relating to a transaction may be included in first captured images obtained by capturing of the first camera 31. Thus, the control unit 11 separately recognizes the same person included in first captured images, and specifies a customer who appears most frequently, as a customer relating to a transaction in Act 18.

The control unit 11 selects a first captured image having the largest area of the face region of the person specified in Act 18, among first captured images which include the face region of the person (Act 19). The control unit 11 transmits the first captured image selected in Act 19 to the monitoring server 40 (Act 20), and ends this processing.

With the above processing, the registration device 10 can transmit a first captured image indicating features (face) of a customer, to the monitoring server 40. Thus, it is possible to improve accuracy of recognizing a customer in the monitoring processing which will be described later.

Returning to FIG. 2, the second camera 32 is an image capturing device configured to capture an image of a customer in the accounting region A 12. The second camera 32 is provided on a per accounting device 20 basis. More preferably, the second camera 32 is provided at a position allowing an image of a face of the customer to be captured, in each accounting device 20. The accounting device 20 and the second camera 32 are connected to each other by a connection line L2. The position at which the second camera 32 is disposed is not particularly limited. The second camera 32 may be provided to be integrated with the accounting device 20 or may be provided in, for example, the ceiling of the store in a form of a monitoring camera, and the like.

The accounting device 20 cooperates with the second camera 32, so as to transmit a captured image (referred to as a second captured image below) obtained during accounting processing, to the monitoring server 40.

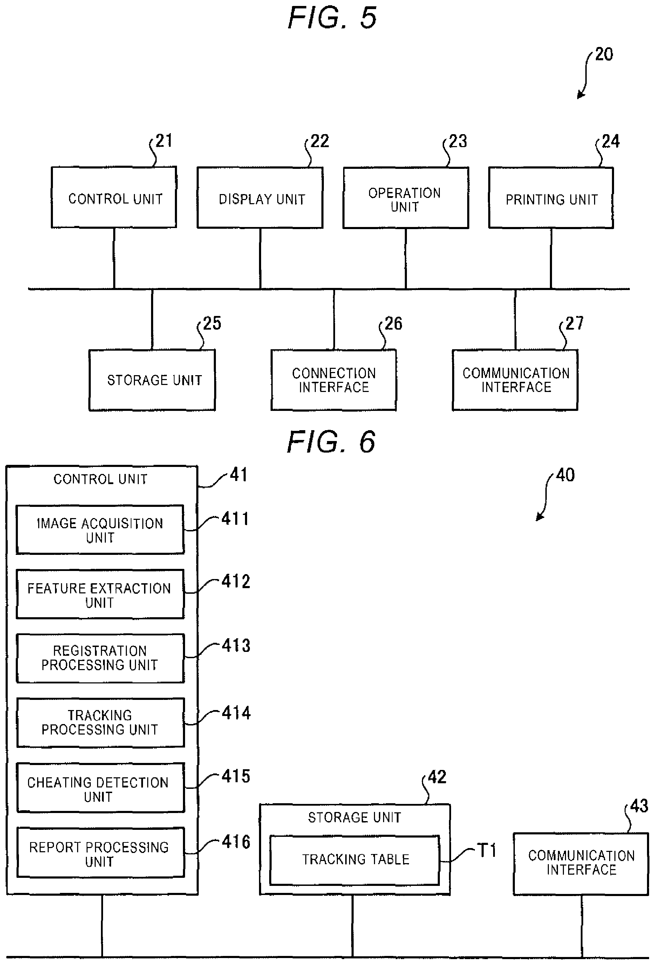

FIG. 5 is a diagram illustrating an example of a configuration of the accounting device 20 according to the first embodiment. As illustrated in FIG. 5, the accounting device 20 includes a control unit 21. The control unit 21 has computer components such as a CPU or a SoC, a ROM, a RAM, and the like.

A display unit 22, an operation unit 23, a printing unit 24, a storage unit 25, a connection interface 26, a communication interface 27, and the like are connected to the control unit 21 through a bus and the like.

The display unit 22 has a display device such as a liquid crystal display. The display unit 22 displays various types of information such as accounting information, under control of the control unit 21. The operation unit 23 includes various types of operation keys or pointing devices. The operation unit 23 receives an operation of an operator (customer). For example, the operation unit 23 includes an operation key and the like for an instruction to start or complete accounting processing. The operation unit 23 may be a touch panel provided on a display surface of the display unit 22.

The printing unit 24 is a printing device such as a thermal printer. The printing unit 24 prints details and the like of accounting (accounting information) on a sheet medium such as a receipt sheet, under control of the control unit 21. The storage unit 25 is a storage device such as a HDD or a flash memory. The storage unit 25 stores a program executed by the control unit 21 and various types of data used when the program is executed.

The connection interface 26 is an interface which is connectable to the second camera 32. The connection interface 26 receives a second captured image input from the second camera 32. The communication interface 27 is a communication interface which is connectable to the network N1. The communication interface 27 transmits and receives various types of information to and from an external device (for example, registration device 10 and monitoring server 40) which is connected to the network N1.

Although not illustrated, a money deposit machine which receives input coins or bills, a money withdrawal machine which dispenses changes, and the like are connected to the control unit 21 through the bus and the like.

In the accounting device 20 having the above configuration, the control unit 21 causes accounting information transmitted from the registration device 10 to be temporarily stored in the RAM and the like, and waits for starting accounting processing relating to the accounting information. If a customer moves to the accounting device 20 of which an instruction is performed by a sales clerk at the registration device 10, the customer performs an instruction to start the accounting processing through the operation unit 23. If an instruction to start the accounting processing is performed, the control unit 21 receives payment (depositing) of commodity price, based on the accounting information which is temporarily stored. If the payment is completed, the control unit 21 causes a receipt sheet on which the details are printed to be output from the printing unit 24, and then ends the accounting processing.

The control unit 21 acquires second captured images obtained by capturing of the second camera 32, during a period in which the accounting processing is performed. If the accounting processing is completed, the control unit 21 transmits the second captured images acquired during the accounting processing, to the monitoring server 40. Here, it is assumed that the number of pieces of second captured images (still images) or the number of frames (moving images) which are transmitted to the monitoring server 40 are not particularly limited. The control unit 21 may perform transmission-image selection processing in a manner similar to that in the above-described registration device 10, and thus may select a second captured image to be transmitted to the monitoring server 40, based on the area of the face region, a appearance frequency, or the like.

Returning to FIG. 2, the third camera 33 is an image capturing device configured to capture an image of a customer in the exit region A13. The third camera 33 is provided at a position allowing an image of the face of a customer who passes through the exit B11 to be captured. The third camera 33 transmits an obtained captured image (referred to as a third captured image below), to the monitoring server 40. The position at which the third camera 33 is disposed is not particularly limited. The third camera 33 may be provided in, for example, the ceiling of the store in a form of a monitoring camera, and the like.

The monitoring server 40 is a server apparatus configured to monitor an operation of a customer in the checkout region A1, based on captured images obtained by capturing of the first camera 31, the second camera 32, and the third camera 33. The monitoring server 40 will be described below.

FIG. 6 is a diagram illustrating an example of a configuration of the monitoring server 40 according to the first embodiment. As illustrated in FIG. 6, the monitoring server 40 includes a control unit 41. The control unit 41 has computer components such as a CPU or a SoC, a ROM, a RAM, and the like.

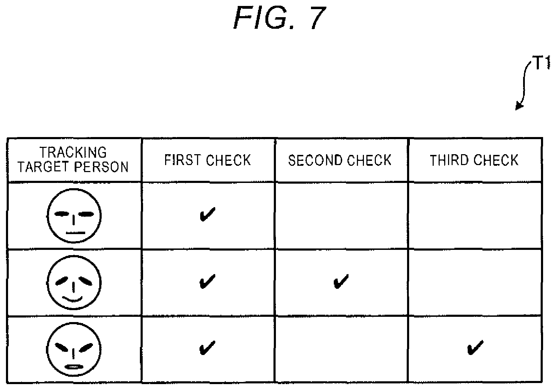

A storage unit 42 is connected to the control unit 41 through a bus and the like. The storage unit 42 is a storage device such as a HDD or a flash memory. The storage unit 42 stores a program executed by the control unit 41 and various types of data used when the program is executed. The storage unit 42 stores a tracking table T1 (see FIG. 7) for tracking a movement path of a customer in the checkout region A1.

A communication interface (I/F) 43 is connected to the control unit 41 through the bus and the like. The communication interface 43 is connected to the network N1, so as to transmit and receive various types of information to and from other devices (registration device 10, accounting device 20, third camera 33, and the like).

As illustrated in FIG. 6, the control unit 41 includes functional units of, for example, an image acquisition unit 411, a feature extraction unit 412, a registration processing unit 413, a tracking processing unit 414, a cheating detection unit 415, and a report processing unit 416. The above functional units are realized in a form of software, by executing a program stored in the storage unit 42 or are realized in a form of hardware, by using a dedicated processor and the like included in the control unit 41.

The image acquisition unit 411 acquires a captured image obtained by capturing of each of the first camera 31, the second camera 32, and the third camera 33, through the communication interface 43. More specifically, the image acquisition unit 411 acquires a first captured image transmitted from each registration device 10. The image acquisition unit 411 acquires a second captured image transmitted from each accounting device 20. The image acquisition unit 411 acquires a third captured image transmitted from the third camera 33.

The feature extraction unit 412 extracts feature information from each of the captured images (first captured image, second captured image, and third captured image) acquired by the image acquisition unit 411. The feature information indicates features of a person (customer), which are included in the captured image. Here, the feature information corresponds to, for example, feature data indicating features of a face region included in the captured image. Detecting a face region may be not possible, for example, because a person in the captured image wears sunglasses, a mask, or the like. In such a case, the feature extraction unit 412 extracts features of an element, as the feature information. The feature extraction unit 412 performs extraction from other elements such as clothes, a hairstyle, and a body type of the person. Feature information extracted from the first captured image is referred to as first feature information below. Feature information extracted from the second captured image is referred to as second feature information below. Feature information extracted from the third captured image is referred to as third feature information below. A method of extracting feature information is not particularly limited, and may use well-known technologies such as facial recognition or image recognition.

The registration processing unit 413 is a functional unit configured to set a customer as a target of tracking. More specifically, the registration processing unit 413 registers first feature information extracted from a first captured image by the feature extraction unit 412, in the tracking table T1 of the storage unit 42.

Here, FIG. 7 is a diagram illustrating an example of a data structure of the tracking table T1. As illustrated in FIG. 7, the tracking table T1 has a tracking target field, a first check field, a second check field, and a third check field, as items. The above items constitute one data entry of each customer.

The tracking target field is an item in which first feature information of a customer as a target of tracking is registered. The registration processing unit 413 registers first feature information extracted from a first captured image, in the tracking target field. The first check field is an item for checking whether the customer as a target of tracking completes registration of a commodity. In the embodiment, the first captured image is obtained in the registration device 10. Thus, the registration processing unit 413 registers first feature information in the tracking target field, and registers check information indicating that commodities are registered, in the first check field. The second check field is an item for checking whether the customer as a target of tracking completes accounting in the accounting device 20. The third check field is an item for checking whether the customer as a target of tracking is directed to the exit B 11. An operation of registering check information in the first check field, the second check field, and the third check field is also simply referred to checking.

Returning to FIG. 6, the tracking processing unit 414 is a functional unit configured to compare captured images (pieces of feature information) of the regions to each other, and to track a movement path of a customer in the accounting region A 12 and the exit region A13. It is assumed that the tracking processing unit 414 uses a well-known technology such as facial recognition or image recognition, in comparison between the captured images (pieces of feature information).

Specifically, the tracking processing unit 414 compares second feature information extracted from a second captured image to pieces of first feature information registered in the tracking table T1, and determines whether or not first feature information of which similarity with the second feature information is equal to or more than a threshold is provided. When the first feature information of which similarity is equal to or more than the threshold is provided, the tracking processing unit 414 recognizes that a customer corresponding to the provided first feature information is the same as a person corresponding to the second feature information, and determines that the customer completes accounting in the accounting device 20. The tracking processing unit 414 registers check information indicating completion of accounting, in the second check field of a data entry in which the corresponding first feature information is registered. It is assumed that the tracking processing unit 414 selects one piece of first feature information of which the similarity is highest, when plural pieces of first feature information of which similarity is equal to or more than the threshold are provided.

The tracking processing unit 414 compares third feature information extracted from a third captured image to the pieces of first feature information registered in the tracking table T1. The tracking processing unit 414 determines whether or not first feature information of which similarly with the third feature information is equal to or more than a threshold is provided. When the first feature information of which the similarity is equal to or more than the threshold is provided, the tracking processing unit 414 recognizes that a customer corresponding to the first feature information is the same person as a customer corresponding to the third feature information, and determines that the customer is directed to the exit B11. The tracking processing unit 414 registers check information indicating that the customer is directed to the exit B 11, in the third check field of a data entry in which the corresponding first feature information is registered. When plural pieces of first feature information of which similarity is equal to or more than the threshold are provided, the tracking processing unit 414 selects one piece of first feature information of which the similarity is highest, and checks the third check field of a data entry in which the corresponding first feature information is registered.

The cheating detection unit 415 monitors the tracking table T1 and detects a customer which may do cheating. More specifically, the cheating detection unit 415 determines whether or not there is a probability of cheating occurring, based on statuses of pieces of check information registered in three check fields of the first check field, the second check field, and the third check field, that is, based on a movement path of a customer.

For example, when the first check field and the third check field are checked, and the second check field is not checked yet, a customer who completes registration of a commodity may take a not-paid commodity out of the store. Thus, the cheating detection unit 415 detects a case where a state of check information registered in the tracking table T1 indicates that a customer reaches the exit region A13 from the registration region A11 without passing through the accounting region A12, to have a probability of cheating.

When checking all of the three check fields is completed, the cheating detection unit 415 determines that registration and accounting is normally performed, and excludes the corresponding data entry from the list of targets of tracking. Here, "exclusion from the list of targets of tracking" means that flag information for an instruction of not being a target of tracking is added, the data entry itself is removed from the tracking table T1, or the data entry is moved to another data table. It is preferable that the cheating detection unit 415 determines whether or not there is a probability of cheating, at a timing when check information is registered in the third check field.

The report processing unit 416 is a functional unit configured to perform a report in accordance with a detection result of the cheating detection unit 415. More specifically, the report processing unit 416 performs a report to a sales clerk under a condition that the cheating detection unit 415 detects that there is a probability of cheating. A reporting method is not particularly limited, and various methods may be employed. For example, the report processing unit 416 may transmit a message for reporting an occurrence of cheating or report information including captured image (feature information) and the like of the corresponding customer to each registration device 10. When each sales clerk holds a portable type communication device which is connected to the network N 1, the report processing unit 416 may transmit report information to the communication device as a destination. When a report device such as a warning buzzer or a warning lamp is provided in the exit region A 13 and the like, the report device may be operated, so as to perform reporting.

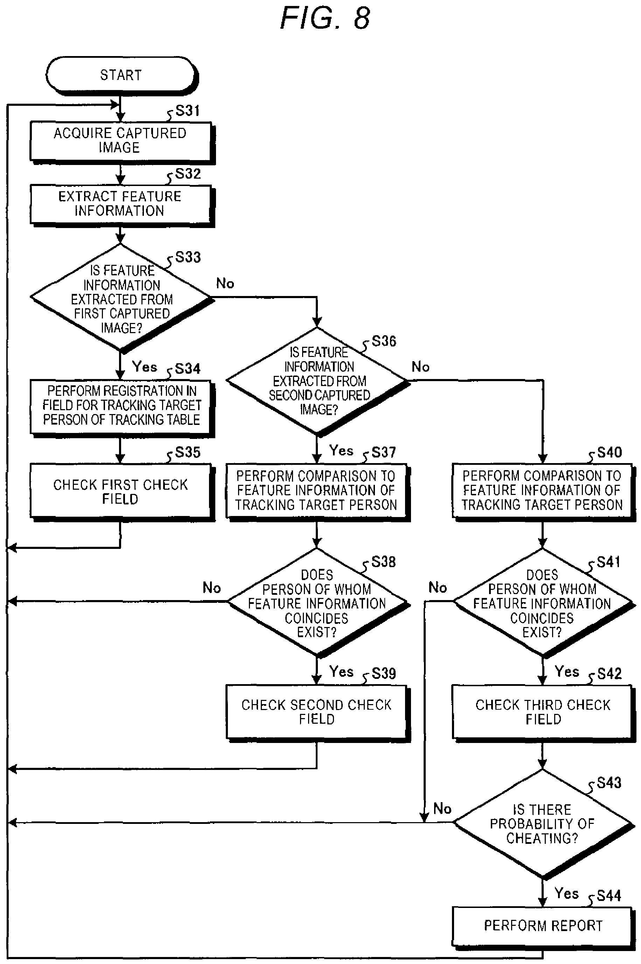

Next, an operation of the above-described monitoring server 40 will be described with reference to FIG. 8. FIG. 8 is a flowchart illustrating an example of monitoring processing performed by the monitoring server 40 in the first embodiment.

Firstly, the image acquisition unit 411 acquires a captured image transmitted from each of the devices (Act 31). Then, the feature extraction unit 412 extracts feature information from the captured image acquired in Act 31 (Act 32).

The registration processing unit 413 registers first feature information extracted in Act 32, in the tracking target field of the tracking table T1 under a condition that the first feature information is extracted from the first captured image (Act 33; Yes) (Act 34). The registration processing unit 413 checks the first check field of a data entry in which the first feature information is registered in Act 34 (Act 35), and causes the process to return to Act 31.

The tracking processing unit 414 causes the process to proceed to Act 37 under a condition that second feature information is extracted from a second captured image in Act 32 (Act 33; No → Act 36; Yes). The tracking processing unit 414 compares the extracted second feature information to each of pieces of first feature information registered in the tracking table T1, and calculates similarity between both pieces of the feature information (Act 37). Then, the tracking processing unit 414 determines whether or not first feature information of which similarity with the second feature information is equal to or more than predetermined threshold is provided, that is, whether or not a customer corresponding to a customer of the second feature information exists (Act 38).

When the first feature information of which the similarity is more than the threshold is not provided, the tracking processing unit 414 determines that no corresponding person exists (Act 38; No), and causes the process to return to Act 31. When the first feature information of which the similarity is more than the threshold, the tracking processing unit 414 determines that the corresponding person exists (Act 38; Yes), and checks the second check field of a data entry in which the first feature information is registered (Act 39). The tracking processing unit 414 causes the process to return to Act 31.

The tracking processing unit 414 causes the process to proceed to Act 40 under a condition that third feature information is extracted from a third captured image in Act 32 (Act 33; No → Act 36; No). The tracking processing unit 414 compares the extracted third feature information to each of pieces of first feature information registered in the tracking table T1, and calculates similarity between both pieces of the feature information (Act 40). Then, the tracking processing unit 414 determines whether or not first feature information of which the similarity with the third feature information is more than predetermined threshold is provided, that is, whether or not a customer corresponding to a customer of the third feature information exists (Act 41).

When the first feature information of which the similarity is more than the threshold is not provided, the tracking processing unit 414 determines that no corresponding person exists (Act 41; No), and causes the process to return to Act 31. When the first feature information of which the similarity is more than the threshold is provided, the tracking processing unit 414 determines that the corresponding person exists (Act 41; Yes), and checks the third check field of a data entry in which the first feature information is registered (Act 42).

The cheating detection unit 415 determines whether or not there is a probability of cheating, with reference to a state (movement path) of each of the check fields in the data entry having the third check field which is checked in Act 42 (Act 43). Here, when all of the first check field, the second check field, and the third check field are checked, the cheating detection unit 415 determines that accounting procedures of a commodity are normally performed (Act 43; No), and causes the process to return to Act 31.

When the first check field and the third check field are checked and the second check field is not checked yet, the cheating detection unit 415 determines that there is a probability of cheating (Act 43; Yes). The report processing unit 416 transmits report information so as to perform a report to a sales clerk (Act 44), and causes the process to return to Act 31.

As described above, the monitoring server 40 in the embodiment tracks a movement path of a customer in the checkout region A1 based on captured images obtained by respectively capturing images of the registration region A11, the accounting region A12, and the exit region A13. The monitoring server 40 detects a customer who has a probability of cheating, based on the tracked movement path, and performs a report to a sales clerk. Thus, the monitoring server 40 can efficiently detect an occurrence of cheating in which a not-paid commodity is taken out of a store, in the monitoring system based on comparison of captured images.

In the embodiment, the registration device 10 has a configuration in which a first captured image is transmitted to the monitoring server 40 when the registration processing is completed. However, it is not limited thereto, and the first captured image may be transmitted in the middle of the registration processing. Similarly, the accounting device 20 has a configuration in which a second captured image is transmitted to the monitoring server 40 when the accounting processing is completed. However, it is not limited thereto, and the second captured image may be transmitted in the middle of the accounting processing. The accounting device 20 may have a configuration in which, when a face region of a person (customer) is detected from the second captured image, it is considered that the customer performs accounting, and the second captured image is transmitted to the monitoring server 40. In a case of employing the above configurations, a determination criterion of whether or not accounting is performed is looser than that in the configuration of the above-described embodiment. Thus, it is preferable that the above configuration is used, for example, in a case of simply tracking the movement path of a customer.

In the embodiment, a configuration in which a customer performs accounting processing in the accounting device 20 designated by a sales clerk is made. However, it is not limited thereto, and a configuration in which a customer performs the accounting processing in any accounting device 20 may be made. In a case of employing this configuration, for example, the registration device 10, the accounting device 20, and the monitoring server 40 may be operated as follows, and thus accounting processing may be performed in any accounting device 20.

Firstly, if the control unit 11 of the registration device 10 receives an instruction to end registration processing, the control unit 11 transmits a set of accounting information generated in the registration processing and a first captured image obtained by capturing during the registration processing, to the monitoring server 40. In the monitoring server 40, the feature extraction unit 412 extracts first feature information from the first captured image which is transmitted from the registration device 10. The registration processing unit 413 registers the extracted first feature information in the tracking table T1, and checks the first check field. The feature extraction unit 412 registers (stores) accounting information which forms a set along with the first captured image which is an extraction source of the first feature information, in the tracking table T1. The accounting information is registered (stored) in association with the registered first feature information.

A customer who completes registration of a commodity in the registration device 10 moves to a certain accounting device 20. If the control unit 21 of the accounting device 20 receives an instruction to start accounting processing by the customer, the control unit 21 transmits a second captured image obtained by capturing of the second camera 32, to the monitoring server 40. In the monitoring server 40, the feature extraction unit 412 extracts second feature information from the second captured image which is transmitted from the accounting device 20. Then, the tracking processing unit 414 specifies first feature information of the customer of whom an image is captured in the accounting device 20 (second camera 32) among pieces of first feature information registered in the tracking table T1, based on the second feature information. Then, the control unit 41 of the monitoring server 40 transmits accounting information associated with the specified first feature information, to the accounting device 20 which transmits the second captured image.

If the control unit 21 of the accounting device 20 receives accounting information from the monitoring server 40, the control unit 21 performs accounting processing based on the received accounting information. After the accounting processing is completed, the control unit 21 of the accounting device 20 transmits a second captured image obtained by capturing in the middle of the accounting processing, to the monitoring server 40. The subsequent processing is similar to that in the above-described embodiment.

### Second Embodiment

Next, a second embodiment will be described, In the second embodiment, a store employing a checkout method in which a customer himself/herself performs registration and accounting will be described as an example. Components similar to those in the first embodiment will be denoted by the same reference signs, and descriptions thereof will be not repeated.

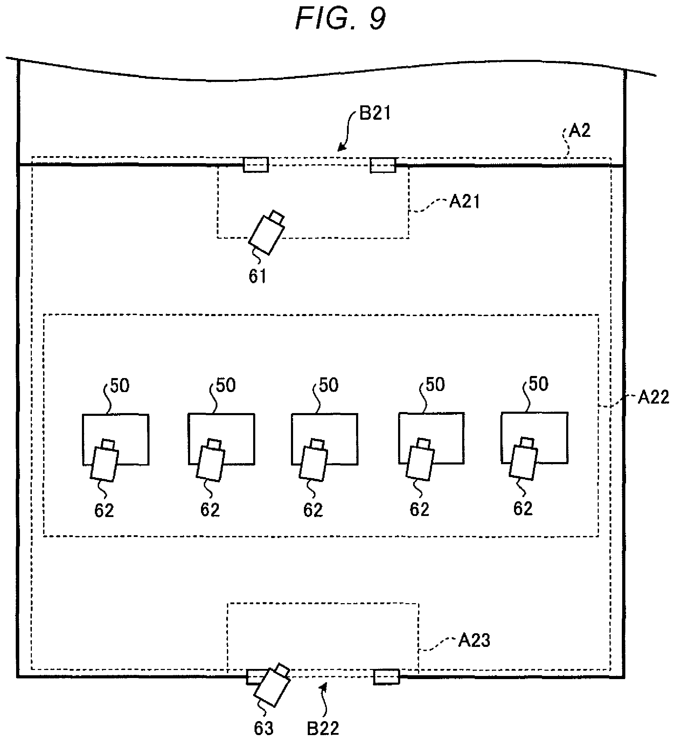

FIG. 9 is a schematic diagram illustrating an example of a store layout according to the second embodiment. As illustrated in Fig. 9, a store has a checkout region A2 which relates to registration and accounting of commodities. The checkout region A2 includes an entrance region A21, a registration and accounting region A22, and an exit region A23.

The entrance region A21 corresponds to a first region positioned at an entrance of the checkout region A2. An entrance B21 to the checkout region A2 is provided in the entrance region A21. The registration and accounting region A22 corresponds to a second region in which a customer performs registration and accounting of a commodity. A registration and accounting device 50 is provided in the registration and accounting region A22. The exit region A23 corresponds to a third region positioned at an exit of the checkout region A2. An exit B22 of the store is provided in the exit region A23. Although not illustrated, it is assumed that a region in which commodities as a sales target are displayed is provided in the store (for example, space over the checkout region A2).

The registration and accounting device 50 is a commodity data processing device which is operated by a customer, and is configured to perform registration processing and accounting processing of a commodity to be purchased by the customer. That is, the registration and accounting device 50 realizes a checkout method referred to as a self-checkout type, for example.

In a store having a layout illustrated in FIG. 9, an operation when a customer purchases a commodity is as follows. Firstly, a customer puts a commodity to be purchased into a shopping basket, and moves from the entrance region A21 (entrance B21) to the registration and accounting region A22 (registration and accounting device 50). In the registration and accounting device 50, the customer causes a reading unit to read a bar code attached to the commodity, and thus registers the commodity. If registration of the commodities is completed, the customer performs accounting in the registration and accounting device 50. If the accounting is completed, the customer puts the purchased commodities into a plastic bag and the like, and then moves to the exit region A23 (exit B22).

In this manner, in the self-checkout type, a customer himself/herself performs registration and accounting. Thus, it is possible to achieve improvement of efficiency in processing, for example, reduction of a time to wait at a register. However, in the self-checkout type, a customer himself/herself performs registration and accounting. Thus, similarly to that in the semi-self checkout type, cheating which is referred to as, for example, "shoplifting" may occur.

In a monitoring system according to this embodiment, images of the entrance region A21, the registration and accounting region A22, and the exit region A23 are respectively captured, and detection of a customer who may do cheating is performed based on the captured images. A configuration of the monitoring system according to the embodiment will be described below.

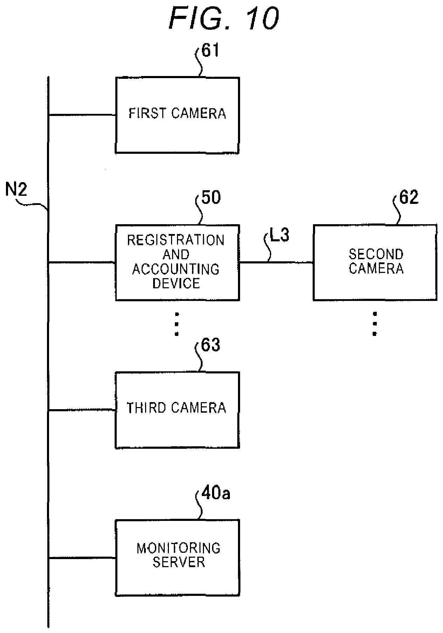

FIG. 10 is a schematic diagram illustrating an example of a configuration of the monitoring system according to the second embodiment. As illustrated in FIG. 10, the monitoring system includes a first camera 61, a second camera 62, a third camera 63, and a monitoring server 40a along with the above-described registration and accounting device 50. The registration and accounting device 50, the first camera 61, the third camera 63, and the monitoring server 40a are connected to a network N2 such as a LAN.

The first camera 61 is an image capturing device configured to capture an image of a customer in the entrance region A21. The first camera 61 is provided at a position allowing the face of a customer who enters into the checkout region A2 from the entrance B21. The first camera 61 transmits an obtained captured image (referred to as a first captured image below), to the monitoring server 40a. The position at which the first camera 61 is disposed is not particularly limited. The first camera 61 may be provided at a gate of the entrance B21 or may be provided in, for example, the ceiling of the store in a form of a monitoring camera, and the like.

The second camera 62 is a camera configured to capture an image of a customer in the registration and accounting region A22. The second camera 62 is provided in each registration and accounting device 50. More preferably, the second camera 62 is provided at a position allowing an image of a face of the customer to be captured, in each registration and accounting device 50. The registration and accounting device 50 and the second camera 62 which form a set is connected to each other by a connection line L3. The position at which the second camera 62 is disposed is not particularly limited. The second camera 62 may be provided to be integrated with the registration and accounting device 50 or may be provided in, for example, the ceiling of the store in a form of a monitoring camera, and the like.

The registration and accounting device 50 cooperates with the second camera 62, so as to transmit a captured image (referred to as a second captured image below) obtained during accounting processing, to the monitoring server 40a. The configuration of the registration and accounting device 50 is similar to a configuration obtained by combining the registration device 10 and the accounting device 20 which are described above. Thus, detailed descriptions thereof will be not repeated.

The registration and accounting device 50 acquires a second captured image obtained by capturing of the second camera 62 during a period in which accounting processing is performed. If the accounting processing is completed, the registration and accounting device 50 transmits the second captured image acquired during the accounting processing, to the monitoring server 40a. Here, it is assumed that the number of pieces of second captured images (still images) or the number of frames (moving images) which are transmitted to the monitoring server 40a are not particularly limited. The registration and accounting device 50 may acquire a second captured image during a period in which registration processing is performed, and may transmit the acquired second captured image to the monitoring server 40a at a timing at which the registration processing or accounting processing is completed. The registration and accounting device 50 (control unit) may perform transmission-image selection processing in a manner similar to that in the above-described registration device 10, and thus may select a second captured image to be transmitted to the monitoring server 40a, based on the area of the face region, a appearance frequency, or the like.

The third camera 63 is an image capturing device configured to capture an image of a customer in the exit region A23. The third camera 63 is provided at a position allowing an image of the face of a customer who passes through the exit B22 to be captured. The third camera 63 transmits an obtained captured image (referred to as a third captured image below), to the monitoring server 40a. The position at which the third camera 63 is disposed is not particularly limited. The third camera 63 may be provided at a gate of the exit B22 or may be provided in, for example, the ceiling of the store in a form of a monitoring camera, and the like.

The monitoring server 40a is a server apparatus configured to monitor an operation of a customer in the checkout region A2, based on captured images obtained by capturing of the first camera 61, the second camera 62, and the third camera 63. The monitoring server 40a will be described below. Components similar to those in the first embodiment are denoted by the same reference signs, and descriptions thereof will be not repeated.

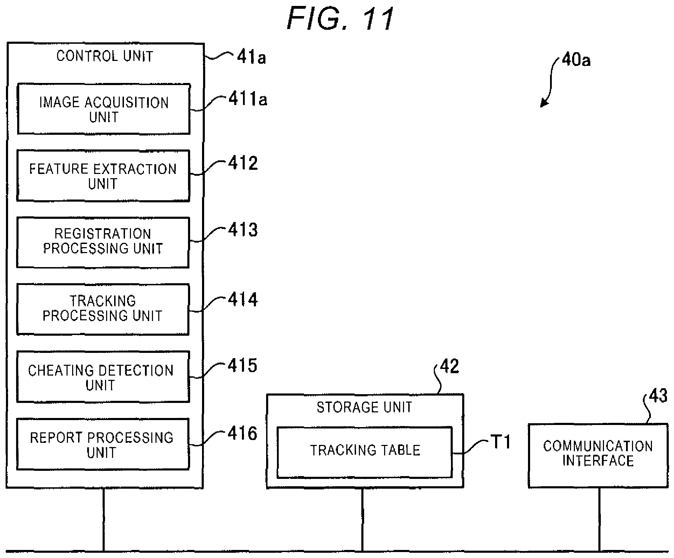

FIG. 11 is a diagram illustrating an example of a configuration of the monitoring server 40a according to the second embodiment. As illustrated in FIG. 11, the monitoring server 40a includes a control unit 41a. The control unit 41a has computer components such as a CPU or a SoC, a ROM, a RAM, and the like.

The storage unit 42 and the communication interface (I/F) 43 are connected to the control unit 41a through a bus and the like. The storage unit 42 stores the tracking table T1 (see FIG. 7) having a data structure similar to that in the first embodiment.

As illustrated in FIG. 11, the control unit 41a includes functional units of an image acquisition unit 411a, the feature extraction unit 412, the registration processing unit 413, the tracking processing unit 414, the cheating detection unit 415, the report processing unit 416, and the like. The above functional units are realized in a form of software, by executing a program stored in the storage unit 42 or are realized in a form of hardware, by using a dedicated processor and the like included in the control unit 41a.

The image acquisition unit 411a acquires a captured image obtained by capturing of each of the first camera 61, the second camera 62, and the third camera 63, through the communication interface 43. More specifically, the image acquisition unit 411a acquires a first captured image transmitted from the first camera 61. The image acquisition unit 411a acquires a second captured image transmitted from each registration and accounting device 50. The image acquisition unit 411a acquires a third captured image transmitted from the third camera 63.

The control unit 41a cooperates with the above-described functional units, so as to perform the monitoring processing illustrated in FIG. 8. Thus, the monitoring server 40a in this embodiment tracks a movement path of a customer in the checkout region A2 based on captured images obtained by capturing of the entrance region A21, the registration and accounting region A22, and the exit region A23. The monitoring server 40a detects a customer who has a probability of cheating, based on the tracked movement path, and performs a report to a sales clerk. Thus, the monitoring server 40a can efficiently detect an occurrence of cheating in which a not-paid commodity is taken out of a store, in the monitoring system based on comparison of captured images.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

For example, in the above embodiments, the monitoring server 40 (40a) extracts feature information from a captured image. However, it is not limited to the above embodiments, and feature information may be extracted in a device as a transmission source of a captured image. For example, any or all of the registration device 10, the accounting device 20, and the registration and accounting device 50 may include the feature extraction unit 412, and transmit feature information extracted from a captured image, to the monitoring server 40 (40a). Each of the cameras (for example, third camera 33, first camera 61, and third camera 63) may include the feature extraction unit 412, and transmit feature information extracted from a captured image, to the monitoring server 40 (40a). In this case, in the monitoring server 40 (40a), the registration processing unit 413 registers first feature information transmitted from the registration device 10 or the first camera 61, in the tracking table T1. The tracking processing unit 414 tracks a movement path of the same customer, based on similarity of each piece of first feature information registered in the tracking table T1 to second feature information and third feature information which are transmitted from other devices.

In the above embodiments, the monitoring server 40 (registration processing unit 413) registers first feature information extracted from a first captured image, in the tracking table T1, However, it is not limited to the above embodiments, and the first captured image may be registered in the tracking table T1. In this case, the feature extraction unit 412 cooperates with the tracking processing unit 414, and thus extracts feature information from each captured image when similarity between captured images is compared.

In the above embodiments, the monitoring server 40 (40a) monitors the occurrence of cheating. However, it is not limited to the above embodiments, and other devices may perform monitoring. For example, one representative device of the registration device 10 and the accounting device 20 (or registration and accounting device 50) may include the functions of the monitoring server 40(40a), and thus may monitor the occurrence of cheating.

In the above embodiments, the registration device 10, the accounting device 20, and the registration and accounting device 50 transmit captured images. However, it is not limited to the above embodiments, and each of the cameras may directly perform transmission. The first camera 31 and the third cameras 33 and 36 directly transmit captured images. In addition, the first camera 31 and the third cameras 33 and 36 may cooperate with an information processing apparatus such as a personal computer (PC), and thus the information processing apparatus may perform transmission. When transmission from the information processing apparatus is performed, processing similar to the transmission-image selection processing may be performed, and thus a captured image to be transmitted may be selected.

## Claims

1. A monitoring device comprising:
image capturing means for capturing an image of each of a first region positioned at an entrance, a second region in which a customer performs accounting of a commodity, and a third region positioned at an exit in a checkout region relating to registration and accounting of the commodity;
extraction means for extracting feature information indicating features of the customer, from a captured image obtained in each of the first, second, and third regions;
tracking means for tracking a movement path until the customer reaches the third region from the first region, based on similarity of the feature information extracted from the captured image of the first region to the feature information extracted from the captured image of each of the second region and the third region; and
reporting means for reporting when the movement path indicates that the customer reaches the third region from the first region without passing through the second region.

2. The device according to claim 1,
wherein a registration device configured for a sales clerk to register a commodity to be purchased by a customer is provided in the first region,
an accounting device configured for the customer to account for the commodity registered in the registration device is provided in the second region, and
the image capturing means for capturing an image of the second region is provided at a position allowing an image of the customer to be captured, at each of the registration device and the accounting device.

3. The device according to claim 2,
wherein processing which relates to accounting is performed in the accounting device, and then the image capturing means provided in the accounting device transmits a captured image obtained during the processing to the monitoring device.

4. The device according to any one of claims 1 to 3,
wherein a registration and accounting device configured for a customer to perform registration and accounting of a commodity is disposed in the second region, and
the image capturing means for capturing an image of the second region is provided at a position allowing an image of the customer to be captured, at each registration and accounting device.

5. The device according to claim 4,
wherein processing which relates to registration and accounting is performed in the registration and accounting device, and then the image capturing means provided in the registration and accounting device transmits a captured image obtained during the processing to the monitoring device.

6. The device according to any one of claims 1 to 5,
wherein the image capturing means comprises a first camera in the first region, a second camera in the second region, and a third camera in the third region.

7. The device according to any one of claims 1 to 6,
wherein the image capturing means comprises a plurality of first cameras in the first region, a plurality of second cameras in the second region, and a third camera in the third region.

8. A monitoring method comprising:
extracting feature information indicating features of a customer, from a captured image obtained by capturing an image of each of a first region positioned at an entrance, a second region in which a customer performs accounting of a commodity, and a third region positioned at an exit;
tracking a movement path until the customer reaches the third region from the first region, based on similarity of the feature information extracted from the captured image of the first region to the feature information extracted from the captured image of each of the second region and the third region; and
reporting when the movement path indicates that the customer reaches the third region from the first region without passing through the second region.

9. The method according to claim 8, further comprising:
registering a commodity to be purchased by a customer in the first region,
accounting for the commodity registered in the registration device is provided in the second region, and
capturing an image of the second region at a position allowing an image of the customer to be captured, at each of a registration device and a accounting device.

10. The method according to claim 9, further comprising:
performing accounting in the accounting device, and then transmitting a captured image obtained during the processing to a monitoring device.

11. The method according to any one of claims 8 to 10, further comprising:
performing registration and accounting of a commodity in the second region, and
capturing an image of the second region at a position allowing an image of the customer to be captured, at each of a registration and an accounting device.

12. The method according to claim 11, further comprising:
processing registration and accounting in the registration and accounting device, and then transmitting a captured image obtained during the processing to the monitoring device.

13. The method according to any one of claims 8 to 12,
wherein the image capturing is performed by a first camera in the first region, a second camera in the second region, and a third camera in the third region.

14. A monitoring system comprising the monitoring device according to any one of claims 1 to 7.
